# EUROPEAN PATENT SPECIFICATION

(11) **EP 1 741 183 B1**
(45) Date of publication and mention of the grant of the patent: **29.06.2011**
(21) Application number: 05718321.2
(22) Date of filing: 31.03.2005
(51) Int. Cl.: H03H 7/46

(54) **FRONT-END TOPOLOGY FOR MULTIBAND MULTIMODE COMMUNICATION ENGINES**
FRONTEND-TOPOLOGIE FÜR MEHRBAND-MULTIMODUS-KOMMUNIKATIONSSYSTEME
TOPOLOGIE FRONTALE POUR SYSTÈMES DE COMMUNICATION MULTIMODE MULTIBANDE

(30) Priority: 30.04.2004 US 836123
(43) Date of publication of application: 10.01.2007
(73) Proprietor: Nokia Corporation, 02150 Espoo (FI)
(72) Inventor: ELLÄ, Juha, FIN-24800 Halikko (FI); RANTA, Tero, FIN-24800 Halikko (FI)
(74) Representative: Piotrowicz, Pawel Jan Andrzej
(86) International application number: PCT/IB2005/000843
(87) International publication number: WO 2005/107064

(56) References cited:
- WO-A1-2004/070965
- US-B1- 6 573 808
- DATABASE WPI Week 200464, Derwent Publications Ltd., London, GB; Class U21, AN 2004-657462, XP002989021 & JP 2004 253948 A (TDK CORP.) 09 September 2004

## Description

The present invention relates generally to front-end topology and, more particularly, to front-end arrangement for multiband and/or multimode mobile cellular handset electronics.

The term "front-end", as used in this disclosure, means the components and functions between the antennas and the power amplifiers or RF-ASIC (radio frequency application specific integrated circuit), but some front-end modules may also include power amplifiers. The front-end in multiband, multimode engines, especially those that are designed to meet the requirement of MIMO (multiple-input, multiple-output) and/or diversity functionality, is usually very complex in construction and design. Because the front-end generally comprises many switches, it consumes a significant amount of electrical current and needs many control lines. MIMO functionality is required in new and future mobile terminals and, initially, Rx MIMO is prioritized because the downlink data rate is more important than the uplink counterpart in mobile communications. Essentially, Rx MIMO requires more than one Rx path to be provided on a particular band of operations. The outputs of these paths are then monitored and combined to give an enhanced data rate. The antenna fed to each of these paths is independent from each other.

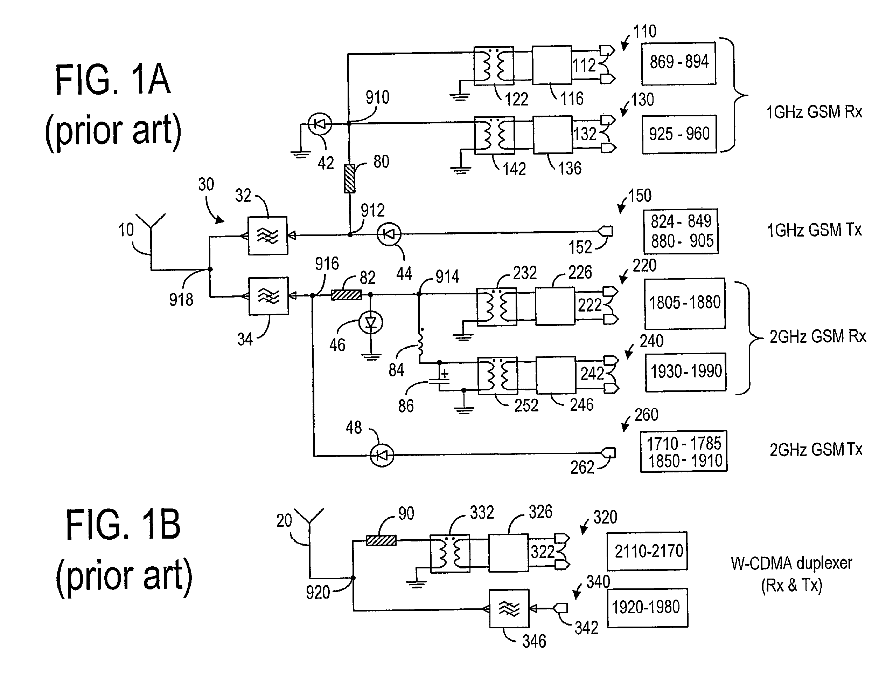

Currently, a GSMIW-CDMA multimode engine is designed to have a separate GSM antenna and a separate W-CDMA antenna. A W-CDMA antenna is connected to a duplexer that has a passband filter for both the Rx and Tx paths of the W-CDMA mode. The GSM antenna is connected to an antenna switch module that typically first separates the 1GHz frequencies from the 2GHz bands using a diplexer or the like. The Rx and Tx paths of each frequency range are then separated by switches (usually PIN diodes). The antenna switch module often also includes harmonic filtering for the power amplifier outputs and may include surface-acoustic wave (SAW) filters to provide filtering for the Rx paths. A typical block diagram of a typical front-end is shown in Figures 1 a and 1b. As shown in Figure 1 a, the GSM module includes four sections: 1GHz GSM Rx section, 1MHz GSM Tx section, 2GHz GSM Rx section and 2GHz GSM Tx section. The 1GHz GSM Rx section includes an 869-894MHz Rx path 110, and the 925-960 MHz Rx path 130. The 1GHz GSM Tx section, collectively denoted as path 150, includes two frequency bands of 824-849MHz and 880-905MHz. The 869-894MHz Rx path **110** includes a filter **116** connected between ports **112** and a balun **122.** The 925-960MHz Rx path **130** includes a filter **136** connected between ports **132** and a balun **142.** The balun functionality can be incorporated into the filters **116** & **136** depending on the filter technology. The Rx paths **110** and **130** are joined at a common node **910.** These Rx paths are also joined with the port **152** of the 824-849/880-905MHz Tx path **150** at a node **912** via a matching element **80.** Here PIN diodes **42** and **44** are used for Tx-Rx switching. Alternatively, other switch technologies can be also used, e.g. CMOS or GaAs p-HEMTs (Pseudomorphic High Electron Mobility Transistor). However, by using the CMOS and p-HEMT switches, the arrangement of biasing and matching elements will be slightly modified.

The 2GHZ Rx section includes a 1805-1880MHz Rx path **220,** commonly referred to as the 1800GSM mode, and the 1930-1990 MHz Rx path **240,** commonly referred to as the 1900GSM mode. The 2GHz GSM Tx section, collectively denoted as path **260,** includes two frequency bands of 1710.1758MHz and 1850-1910MHz. The 1805-1880MHz Rx path **220** includes a filter **226** connected between ports **222** and a balun **232.** The 1930-1990MHz Rx path **240** includes a filter **246** connected between ports **242** and a balun **252.** The Rx paths **220** and **240** are joined at a common node **914** with matching circuits or devices **84, 86.** These Rx paths are also joined with the port **262** of the 1710-1758/1850-1910 MHz Tx path **260** at a node **916** via a matching element **82.** Here PIN diodes **46, 48** are used for Tx-Rx switching. The 1GHz and 2GHZ parts are connected to a common feed point **918** of the GSM antenna **10** through a diplexer **30,** which comprises harmonic filters **32, 34** for the Tx paths **150** and **260.**

In Figure 1b, the W-CDMA module has two paths: a 2110-2170 MHz Rx path **320** and a 1920-1980 MHz Tx path **340.** The Rx path **320** includes a filter **326** connected between ports **322** and a balun **332.** However, the balun can also be after the filter and external to the duplexer. The 1920-1980 Tx path **340** has a passband filter **346** and a port **342.** The Rx path **320** is joined with the Tx path **340** at a node **920** and a common W-CDMA antenna **20** via a matching element **90.** As shown in Figure 1b, the filters **326** and **346** are usually BAW filters. It should be noted that the duplexer can also be a ceramic duplexer. However, it is not possible to have a balun **332** in the Rx branch of a ceramic duplexer. This implies that, to implement both CDMA1900 and CDMA2000 in a front-end according to the US W-CDMA standard, two duplexers are required in addition to the antenna switch module. Also, it would require using one PA to amplify both the CDMA1900 and GSM1900 bands, which is currently impossible.

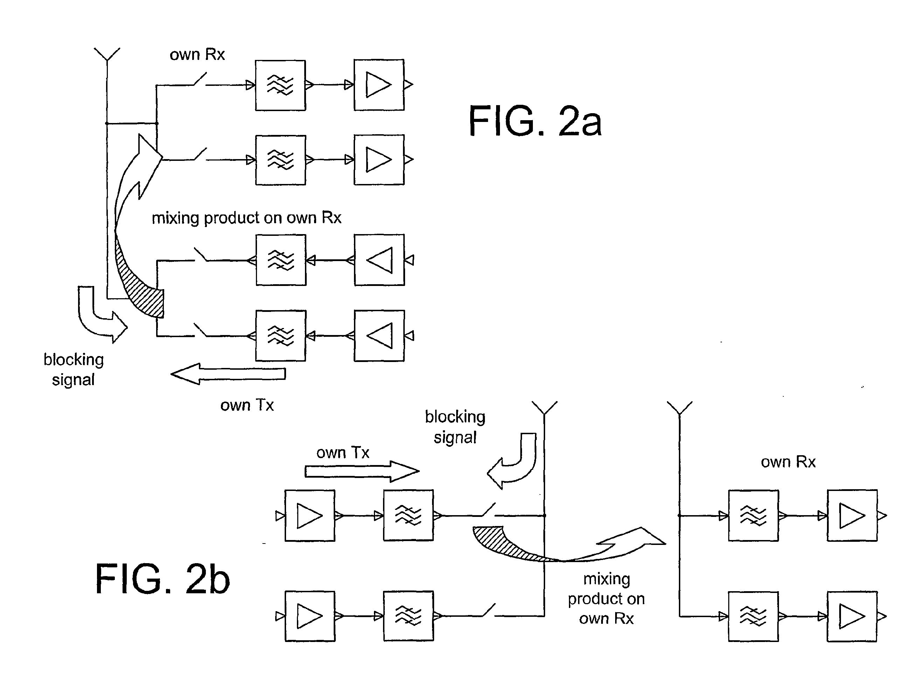

The drawbacks of the prior art architecture, where one antenna is used for the GSM mode and another is used for the W-CDMA mode, are the inflexibility of the architecture, and more importantly, the difficulty in implementing more than one CDMA (or W-CDMA) in one mobile phone. In order to overcome these drawbacks, it is possible to allow the GSM mode and the W-CDMA mode to share a common antenna and to use switches to select between the modes. However, because of the non-linear behavior of the switches, the Rx is desensitized by mixing products arising from the Tx mixed with a blocking signal from the antenna, as shown in Figures 2a and 2b.

It is advantageous and desirable to provide a front-end architecture combining the GSM and W-CDMA modes without the product mixing problems.

EP 0 751 631 A1 describes that an antenna is used in common for transmission and reception in FDD and TDD systems. When the FDD system is selected, the reception signal is sent through a filter BPF1, and the transmission signal is sent through a filter BPF2. When the TDD system is selected, the reception signal and the transmission signal are sent through a filter BPF3.

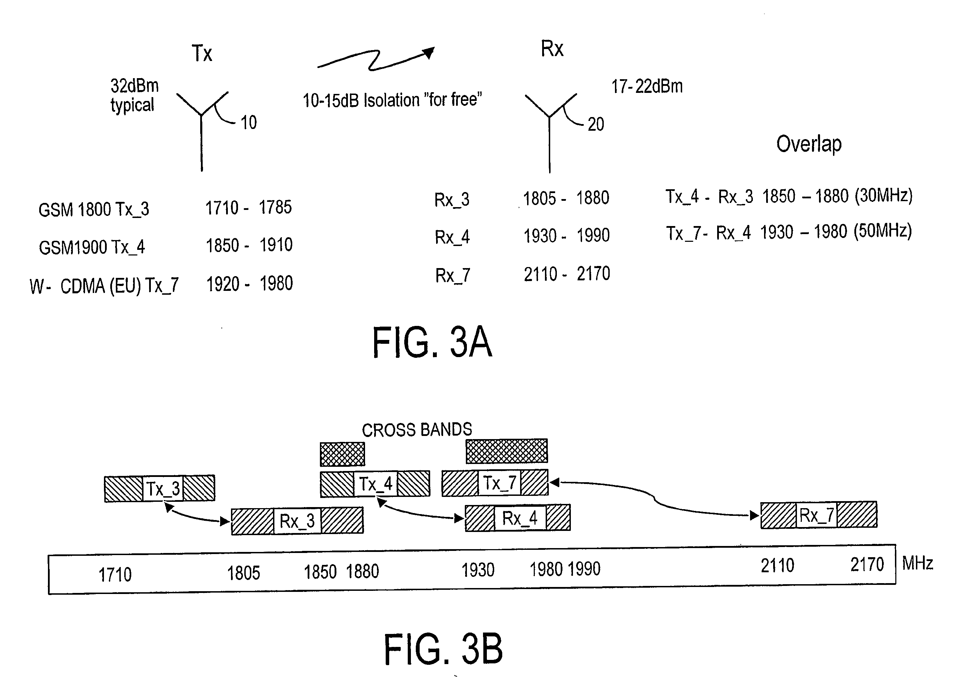

The present invention uses the combination of filters and switches to solve the nonlinearity problems in the GSM/W-CDMA transceiver front-end where one common antenna is used for both the GSM mode and the W-CDMA mode. The present invention makes use of separate Rx/Tx paths and switches in the RX paths to provide sufficient cross-band isolation between bands. An example of cross-band isolation is shown in FIG. 3a.

The present invention is applicable in cellular multimode/multiband phones for US and European standards. It is also applicable to MIMO (multiple input multiple output) transceivers or diversity receivers that may require duplicate Rx-paths for several bands (e.g., 1800/1900GSM and W-CDMA).

According to a first aspect of the present invention, there is provided apparatus comprising a first bandpass filter disposed in a first signal path for filtering radio frequency signals in a first frequency band, the first bandpass filter having a first end and a second end, the first end operatively connectable to one or more antennas, a second bandpass filter disposed in a second signal path for filtering radio frequency signals in a second frequency band different from the first frequency band, the second bandpass filter operatively connectable to the one or more antennas, and a switch having a first, on state and a second, off state disposed at the second end of the first bandpass filter independent of the second signal path for enabling or disabling the first signal path.

The apparatus may further comprise a matching element disposed between the first end of the first bandpass filter and the one or more antenna. The first signal path may comprise a transmit path and the second signal path comprises a receive path.

The first signal path may comprise a first receive path and the second signal path may comprise a second receive path, the second bandpass filter may have a first end and a second end, the first end of the second bandpass filter operatively connectable to the one or more antennas, and the apparatus may further comprise a further switch disposed at the second end of the second bandpass filter for enabling or disabling the second signal path. The apparatus may further comprise a balun operatively connectable to the one or more antennas, and both the first end of the first bandpass filter and the first end of the second bandpass filter may be operatively connectable to the one or more antennas via the balun. The balun may have a first balun end and a second balun end, the first balun end operatively connectable to the one or more antennas, the second balun end connected to the first end of the first filter and the second balun end may also be connected to the first end of the second filter, and the transceiver may further comprise a second switch disposed in the second receive path and operatively connected to the second end of the second filter.

The first frequency band may have a frequency range substantially between 1805MHz and 1880MHz, and the second frequency band may have a frequency range substantially between 1930MHz and 1990MHz. The first frequency band may have a frequency range substantially between 869MHz and 894MHz, and the second frequency band may have a frequency range substantially between 925MHz and 960MHz.

The apparatus may further comprise a matching element operatively connectable to the one or more antennas, a third bandpass filter disposed in a transmit path for filtering signals in a third frequency band, the third bandpass filter having a first end and a second end, the first end operatively connected to the matching element, and a third switch disposed in the transmit path and operatively connected to the second end of the third bandpass filter. The third frequency band may have a frequency range substantially between 824MHz and 849MHz. The third frequency band may have a frequency range substantially between 880MHz and 905MHz.

The apparatus may further comprise a matching element operatively connectable to the one or more antennas, a third bandpass filter disposed in a transmit path for filtering signals in a third frequency band, the third bandpass filter having a first end and a second end, the first end operatively connected to the matching element, and a third switch disposed in the transmit path and operatively connected to the second end of the third bandpass filter. The third frequency band may have a frequency range substantially between 1710MHz and 1785MHz. The third frequency band may have a frequency range substantially between 1850MHz and 1910MHz.

The apparatus may further comprise a further matching element operatively connectable to the one or more antennas, a fourth bandpass filter disposed in a further transmit path for filtering signals in a fourth frequency band, the fourth bandpass filter having a first end and a second end, the first end operatively connected to the further matching element, and a fourth switch disposed in the further transmit path and operatively connected to the second end of the fourth bandpass filter. The third frequency band may have a third frequency range substantially between 1710MHz and 1785MHz, and the fourth frequency range substantially between 1850 and 1910MHz. The third frequency band may have a third frequency range substantially between 1920MHz and 1980MHz, and the fourth frequency range substantially between 1710 and 1910MHz.

The apparatus may further comprise a further balun, and a fifth bandpass filter disposed in another receive path for filtering signals in a fifth frequency band, the fifth bandpass filter operatively connectable to the one or more antennas via the further balun, and the fifth frequency band may have a frequency range substantially between 2110MHz and 2170MHz.

The apparatus may be operated in a first mode in code-division multiplex access fashion and a second mode in GSM, and the apparatus may further comprise a first amplifier for amplifying signals in the first mode, a second amplifier for amplifying signals in the second mode, and a group of further switches including a first, a second, a third and a fourth further switches, each having a first end and a second end, wherein the first end of the first further switch is operatively connectable to the transmit path, and the second end of the first further switch is operatively connected to the first amplifier, the first end of the second further switch is operatively connectable to the transmit path, and the second end of the second further switch is operatively connected to the second amplifier, the first end of the third further switch is operatively connectable to the further transmit path, and the second end of the third further switch is operatively connected to the first amplifier, and the first end of the first further switch is operatively connectable to the further transmit path, and the second end of the fourth further switch is operatively connected to the second amplifier.

The apparatus may further comprise a matching element disposed between the one or more antennas and the balun, the matching element having a first matching element end connectable to the one or more antenna and a second matching element end connected to the balun, and a further balun disposed between the matching element and the second bandpass filter, the further balun having a first balun end connected to the second matching element end and a second balun end connected to the second bandpass filter. The first frequency band may have a first frequency range substantially between 1930MHz and 1990MHz, and the second frequency band may have a second frequency range substantially between 2110MHz and 2170MHz. The apparatus may further comprise a second matching element, a third bandpass filter disposed in a transmit path for filtering signals in the third frequency band, the third bandpass filter having a first end and a second end, the first end operatively connectable to the one or more antennas through the second matching element, and a second switch connected to the second end of the third bandpass filter. The apparatus may further comprise a third matching element, a fourth bandpass filter disposed in a further transmit path for filtering signals in the fourth frequency band, the fourth bandpass filter having a first end and a second end, the first end operatively connectable to the one or more antennas through the third matching element, and a second switch connected to the second end of the fourth bandpass filter. The first frequency band may have a first frequency range substantially between 1930MHz and 1990MHz, the second frequency band may have a second frequency range substantially between 2110MHz and 2170MHz, the third frequency band may have a third frequency range substantially between 1710MHz and 1785MHz, and the fourth frequency band may have a fourth frequency range substantially between 1850MHz and 1910MHz.

There may be provided a communications device comprising one or more antennas for conveying radio frequency signals, and the apparatus. There may be provided a mobile terminal comprising the communications device.

According to a second aspect of the present invention, there is provided a method comprising bandpass filtering radio frequency signals conveyed via a first signal path to or from one or more antennas so as to provide signals in a first frequency band, bandpass filtering radio frequency signals conveyed via a second signal path to or from the one or more antennas so as to provide signals in a second frequency band different from the first frequency band, and switching the signals conveyed via the first signal path independently of the second signal path using a switch having a first, on state and a second, off state so as to selectively enable the first signal path, wherein the signals conveyed frdom the one or more antennas are switched after the filtering thereof and the signals conveyed to the one or more antennas are switched before the filtering thereof.

The first signal path may comprise a transmit path and the second signal path may comprise a receive path, said method may further comprise delaying the signals conveyed in the first signal path after the filtering thereof.

The first signal path may comprise a first receive path and the second signal path may comprise a second receive path, said method may further comprise switching the signals conveyed via the second signal path so as to selectively enable the second signal path, wherein the signals are switched after the filtering thereof. The method may further comprise balancing using a balun the signals conveyed via the first and second signal paths before the filtering thereof.

The present invention will become apparent upon reading the description taken in conjunction with Figures 3 a to 9.
Figure 1 a is a circuit diagram illustrating the GSM part of a prior art front-end module.
Figure 1b is a circuit diagram illustrating the W-CDMA part of the same prior art front-end module of Figure 1a.
Figure 2a is a circuit diagram illustrating product mixing in a front-end having one antenna connected to both transmission paths and reception paths.
Figure 2b is a circuit diagram illustrating product mixing in a front-end having one antenna for transmission and one antenna for reception.
Figure 3 a is a schematic representation showing the Tx-Rx antenna isolation in GSM/W-CDMA front-end, according to the present invention.
Figure 3b is a frequency chart showing the overlapping in GSM and W-CDMA frequencies.
Figure 4 is a circuit diagram illustrating a European GSM/W-CDMA front-end, according to the present invention.
Figure 5 is a circuit diagram illustrating a US GSM/W-CDMA front-end, according to the present invention.
Figure 6 is a circuit diagram illustrating a switched duplexer, according to the present invention.
Figure 7 is a circuit diagram illustrating a front-end module having multiband GSM antenna switch modules and a W-CDMA duplexer, according to the present invention.
Figure 8 is a plot showing the responses of the GSM Tx and W-CDMA Tx branches when the shunt switch at the GSM filter output is biased "on".
Figure 9 is a plot showing the responses of the GSM Tx and W-CDMA Tx branches when the shunt switch at the W-CDMA filter output is biased "on".
Figure 10 is a schematic representation illustrating a communication device having a transceiver front-end, according to the present invention.

The present invention makes use of separate Rx/Tx paths and switches in the RX paths to provide sufficient cross-band isolation between bands. An example of cross-band isolation is shown in Figure 3a. As shown in Figure 3a, the upper band Tx chain connected to the antenna 10 includes 1800GSM Tx_3 (1710-1785MHz): 1900GSM Tx_4 (1850-1910MHz) and W-CDMA (EU) Tx_7 (1920-1980MHz), and the upper band Rx chain connected to the antenna 20 includes 1800GSM Rx_3 (1805-1880MHz), 1900GSM Rx_4 (1930-1990MHz) and W-CDMA (EU) Rx_7 (2110-2170MHz). Thus, the frequency overlap in these chains is: Tx_4 - Rx_3 (30MHz, from 1850 to 1880MHz), and Tx_7 - Tx_4 (50MHz., from 1930 to 1980MHz). The cross band problems are also illustrated in Figure 3b. If the maximum output power at the antenna in Tx mode is 30 to 33dBm (depending on system standard) and a typical isolation that can be achieved between two separate antennas is between 10 to 20dBm, for example, then the power level at the Rx antenna is from 13 to 23dBm. In such a case, the antennas do provide some free Tx to Rx isolation, but for the cross-band this is not sufficient, since a typically acceptable maximum power level at the RF-ASIC input (Rx path) is around 0dBm during Tx time slot (i.e. LNAs in ASIC are off). Therefore, some means of providing additional attenuation in these cross band cases is needed.

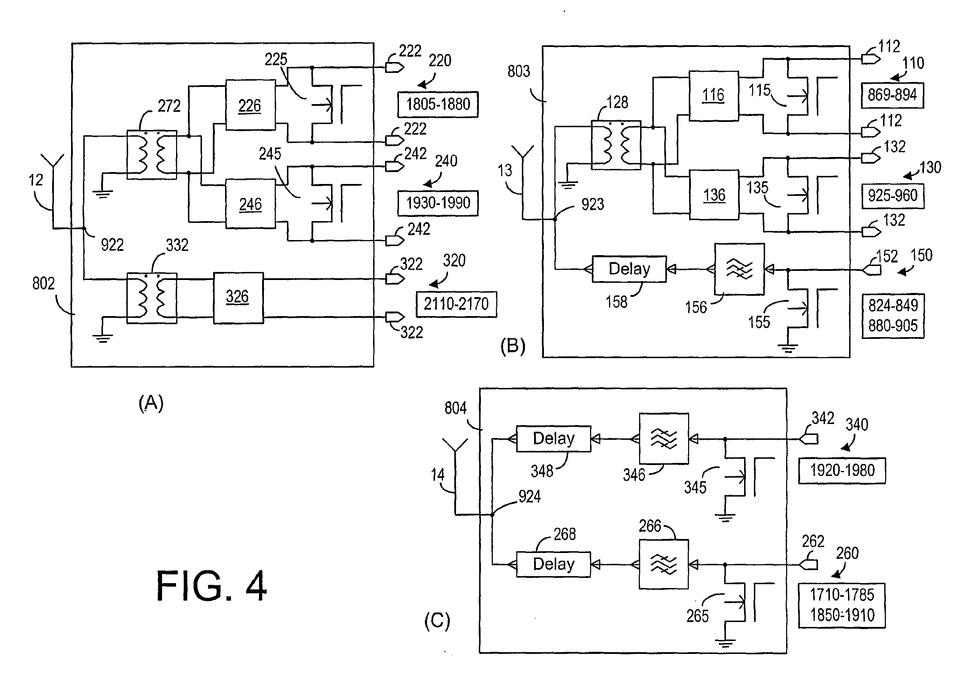

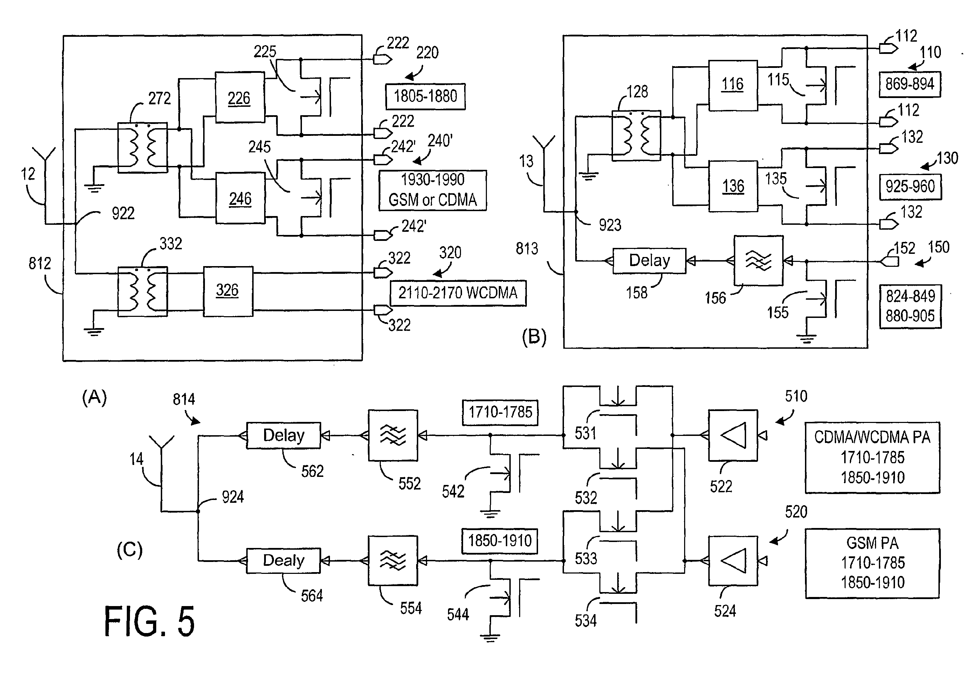

The present invention provides a topology to improve the upper band (2GHz) Rx and Tx performance and to improve the "universality" of the front-end, using the fact that many of the U.S. and European standards share the same frequencies. The topology is illustrated in two embodiments as shown in Figure 4 and Figure 5. Figure 4 illustrates an embodiment of a European front-end, according to the present invention. Figure 5 illustrates an embodiment of a U.S. front-end, according to the present invention. For illustration purposes, the European front-end is shown in three separate blocks in Figures 4a to 4c. Likewise, the US front-end is shown in three separate blocks in Figures 5a to 5c. While the separate blocks in each embodiment can be implemented as one module or parts of some larger modules, separate blocks provide the benefit of flexibility. For example, the 2GHz Tx and the 1GHz part can be physically part of a PA (power amplifier), and the 2GHz Rx parts can be implemented on an RF-backend IC.

The European front-end is an example of a universal front-end in an engine with four GSM bands and the EU W-CDMA: The four GSM bands are:
1) GSM900 (Tx 880-905MHz and Rx 925-960MHz);
2) GSM850 (Tx 824-849MHz and Rx 869-894);
3) GSM 1800 (Tx 1710-1785MHz and Rx 1805-1880MHz) and
4) GSM1900 (Tx 1850-1910MHz and Rx 1930-1990MHz).

The EU W-CDMA occupies the frequencies of (Tx 1920-1980MHz and Rx 2110-2170MHz).

To provide flexibility to the topology, the European front-end is illustrated as separated into three blocks **802, 803** and **804,** separately depicted in Figures 4a, 4b and 4c. The block **802,** as shown in Figure 4a, comprises the 2GHz GSM Rx paths **220** and **240** and a W-CDMA Rx path **320.** All these paths are connected to a common node **922** and a common antenna 12. The paths **220** and **240** share a common balun **272** through separate filters **226** and **246,** respectively. The path **220** has a shunt switch **225** connected between the ports **222** and the filter **226.** The path **240** has a shunt switch **245** connected between the ports **242** and the filter **246.** It should be noted that the filters **226** and **246** are disposed between the respective switches **225, 245** and the antenna **12.** The switches **225** and **245** are used to enable or disable the 2GHz GSM paths. The path **320** has a balun **332** and a filter **326** disposed between the ports **322** and the common node **922.** All the filters **226, 246** and **326** are balanced filters.

The block 803, as shown in Figure 4b, comprises the 1GHz GSM Rx paths **110** and **130** and a 1GHz Tx path **150.** All these paths are connected to a common node **923** and a common antenna **13.** The paths **110** and **130** share a common balun **128** through separate filters **116** and **136,** respectively. The path **110** has a shunt switch **115** connected between the ports **112** and the filter **116.** The path **130** has a shunt switch **135** connected between the ports **132** and the filter **136.** It should be noted that the filters **116** and **136** are disposed between the respective switches **115, 135** and the antenna **13.** The switches **115** and **135** are used to enable or disable the 1GHz GSM paths. The path **150** has a delay **158** and a filter **156** disposed between the ports **152** and the common node **923.** The filters **116** and **136** are balanced filters, whereas the filter **156** is a single-end filter.

The block **804,** as shown in Figure 4c, comprises a 2GHz GSM Tx path **260** and a W-CDMA Tx path **340.** These two paths are connected to a common node **924** and a common antenna **14.** The path **340** has a single-end filter **346** and a delay **348** between the single port **342** and the common node **924.** The path **260** has a single-end filter **266** and a delay **268** between the single port **262** and common node **924.** For path selection, the path **330** has a switch **345** disposed between the port **342** and the filter **346,** and the path **260** has a switch **265** disposed between the port **262** and the filter **266.**

The delays **158, 348** and **268** are used for Tx filter matching.

To provide flexibility to the topology, the U.S. front-end is also illustrated as separated into three blocks **812, 813** and **814,** separately depicted in Figures 5a, 5b and 5c. The block **812,** as shown in Figure 5a, comprises the 2GHz GSM Rx paths **220** and **240'** and a W-CDMA Rx path **320.** The path **240'** is also used as the Rx path for 1900CDMA, which is also known as U.S. W-CDMA (US1) (1930 -1990MHz). All these paths are connected to a common node **922** and a common antenna **12.** The paths **220** and **240'** share a common balun **272** through separate filters **226** and **246,** respectively. The path **220** has a shunt switch **225** connected between the ports **222** and the filter **226.** The path **240'** has a shunt switch **245** connected between the ports **242'** and the filter **246.** It should be noted that the filters **226** and **246** are disposed between the respective switches **225, 245** and the antenna **12.** The switches **225** and **245** are used to enable or disable the 2GHz GSM or 1900CDMA paths. The path **320** has a balun **332** and a filter **326** disposed between the ports **322** and the common node **922.** The block **812** is essentially identical to the block **802** in the European counter.

The block **813,** as shown in Figure 5b, is identical to the block **803,** as shown in Figure 4b.

The block **814,** as shown in Figure 5c, comprises two Tx paths **510** and **520.** However, path **340** and path **260** in block **804** of the European front-end, are used for Tx signals in different frequency ranges. The two Tx paths **510** and **520** are used for the same frequency ranges but for different modes. The path **510** has a PA **522** for the CDMA/W-CDMA mode (US2 Tx: 1710-1785MHz; and US 1 Tx: 1850-1910MHz). The path **520** has a PA **524** for the 2GHz Tx. For selecting between (1710-1785MHz) and (1850-1910MHz), each of the paths **510** and **520** has two switches **(531, 532)** and **(533, 534).** After this switching stage, the 1800 (1710-1785MHz) branch is connected to a common node **924** through a passband filter **552** and a delay **562.** The 1900 (1850-1910MHz) branch is connected to the common node **924** through a passband filter **554** and a delay **564.** For branch selection, the 1800 branch has a switch **542** and the 1900 branch has a switch **544.** It should be noted that all the switches are disposed further from the antenna **14** than the filters **552, 554.** No switches are disposed between the filters **552, 554** and the antenna **14.**

The present invention also makes use of three facts:
1) Two filters close in frequency can be matched to a common node virtually without degradation in performance, even if the separating switch is only located at the output end of the filters (i.e. the filters remain connected to the common node at all times). This is possible when the phase shift through the filter from the common node to the shunt switch is a multiple of 90 degrees (e.g. 90 or 270) or even a multiple of 180 degrees in case of series switch. In practice the path in the "off' state looks like an open circuit from the common node. This is especially important in the case where the pass bands of the selective (WCDMA or CDMA) Tx filter overlap that of the less selective GSM Tx filter. If both of the Tx filters that are to be switched are highly selective and do not overlap, then the phase shift is more just a matching network and does not necessarily need to be exactly 90 degrees. The fact is demonstrated by the switches **225** and **245** in Figure 4a, wherein the switches are implemented on the output sides of the filters **226** and **246,** respectively. This fact is further demonstrated in Figure 4b where the switches **115,135** and **155** are located on the far side of the filters **116,136** and **156,** respectively, in reference to the antenna **13.**
2) By utilizing band pass filters in the Tx part of any CDMA or W-CDMA transmit path where the switch (either in series or shunt) is disposed between the PA and the filter, the blocking signals entering from the antenna will not be able to propagate to the switch because of the selective filter. Therefore, no mixing products will be generated. The switch only needs to be linear enough not to generate too much power on the adjacent channels. This fact is demonstrated in Figure 5c, where the switches **531, 533, 542** and **544** are disposed between the CDMA/W-CDMA PA 552 and the filters **552** and **554** the transmitted paths **510** and **520.**
3) As several of the US and EU bands share either the same Tx or Rx, by proper switching, the number of needed filters will be smaller than the number of standards that can be supported. For example, the Rx path **552** in Figure 5c can be used for both the 2GHz GSM and US2 Tx, US1 Tx.

By combining these facts, a very portable and universal front-end can be designed, although the basic principle can be utilized also to create, for example, a duplexer that supports two Tx and two Rx frequencies and includes a switch at least in the Tx paths.

By comparing the EU front-end as shown in Figure 4 and the U.S. front-end as shown in Figure 5, it can be seen that the difference between the two front-ends is mainly in the 2GHz Tx part (Figures 4c and Figure 5c). Thus, in order to make a similar engine for the U.S. market, only a small modification to the EU front-end in the 2GHz Tx part is required. With this modification, one has an option of also including the new US WCDMA bands (Tx 1710-1785MHz and Rx Rx 2110-2170MHz). Furthermore, the Rx filter **246** (Figures 4a and 5a) at 1930-1990MHz can be used for both the GSM1900 Rx and the CDMA1900 Rx, if properly designed. Similarly, the Tx filter **552** (Figure 5c) for GSM 1800 can also be used for the US WCDMA (US2) and the Tx filter **554** in the 1900 branch can be used for both the GSM1900 Tx and CDMA1900 Tx (US1) through different PAs **552, 554.** As a result, only three Rx filters (**226**, **246, 326** in Figures 4a and 5a) and only two Tx filters (**552**, **554** in Figure 5c) are needed for the four standards (GSM1800&1900 and CDMA / WCDMA) supported at 2GHz.

The present invention as disclosed herein is described in terms of European GSM and W-CDMA standards, but the concepts are also applicable for more US-emphasized band combinations. The disclosure is also based on the assumption that the Rx bands should have differential outputs, and the Tx bands should be single ended, but the concepts are also valid for either single-ended Rx or even differential Tx. Furthermore, the switches referred to in this disclosure can be of any type, i.e. PIN diodes, GaAs P-HMETs, CMOS or even MEMS. Similarly, the selective filters can be SAW filters (either single to balanced or fully balanced), or they can be BAWs (again either fully balanced or filters that incorporate an acoustic balun), the baluns can be integrated or discrete magnetic baluns, transmission line based baluns or even L/C baluns. Thus, the embodiments described herein are relevant to a general topology of the present invention. The disclosed embodiments should not be construed as being achievable only by a certain technology.

The various aspects of the present invention are illustrated in Figures 4 and 5.

Figure 4 represents a possible novel front-end design according the present invention, which includes the four GSM bands and the European WCDMA. The design assumes separate Tx and Rx antennas **12, 14** for the 2GHz bands and one common Tx/Rx antenna **13** for the 1GHz. This is, however, not a prerequisite for the invention. At 2GHz, the separate Tx and Rx antennas **12, 14** are used to relax some of the Tx to Rx isolation requirements and such implementation is preferable from a filter design point of view. At 1GHz, there is only one common antenna **13.** The antenna 13 is physically the largest among the three antennas. In a modem cellular phone, it is impractical to have two separate antennas for 1GHz.

It should be noted that, as shown in Figures 4a to 5c, all of the switches are implemented such that the filters are located between the switches and the antennas. Such implementation is one of the important features in the front-end design, according to the present invention.

It should also be noted that band pass filters can be matched to one common node even if they are only disconnected at the outputs, as long as the impedance at the output can be controlled (i.e. it is 500hms, short or open). In the case of the EU front-end as shown in Figure 4, the 2GHz GSM filter **266** can basically be only a harmonic notch filter without very much selectivity close to the actual Tx bands, whereas the WCDMA Tx filter **346** needs to be very selective in order to provide high attenuation at the WCDMA Rx band (path **320**). If these filters were only passively matched to the common node **924,** the WCDMA Tx in path **340** would see through the GSM filter **266.** As a result, not all the power would be available at the antenna **14.** The combination of the GSM filter **266** with a switch **265** at the output needs to present an "open circuit" to the common node **924** when the WCDMA Tx path **340** is used. This can be achieved by using delays as shown in Figure 4 where the phase delay through the GSM is 90 degrees or an odd multiple thereof. As such, when the GSM switch **265** is biased to "on" during the WCDMA operation, the impedance of the short-circuited switch is transformed to a very high impedance at the common node **924.** For the GSM operation, the switches are biased so that the shunt switch **345** at the output of WCDMA filter **346** is biased "on". This in turn makes the WCDMA filter **346** electrically almost invisible for the GSM Tx signal.

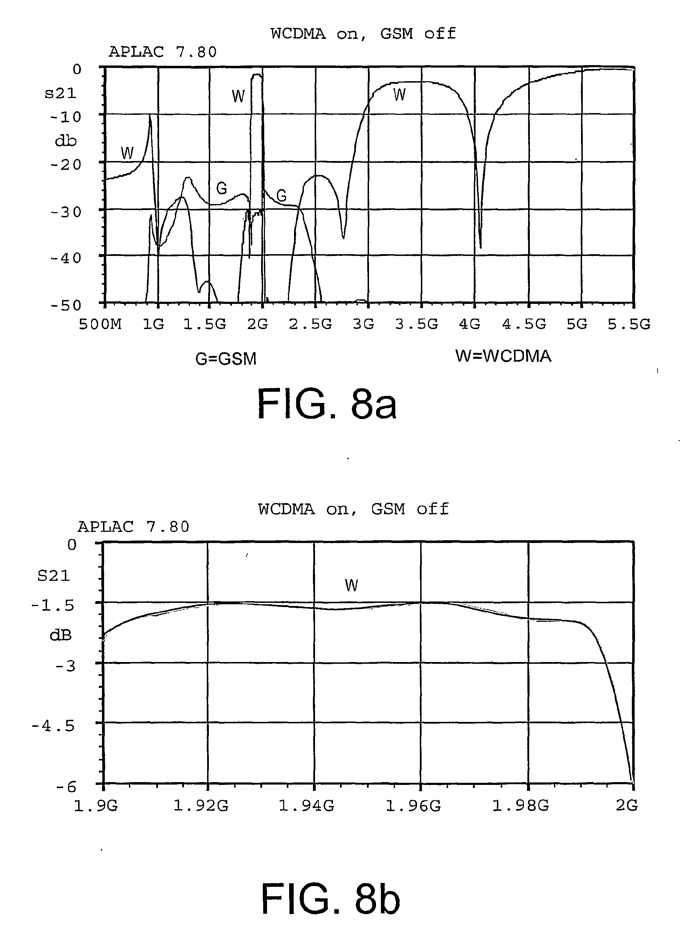

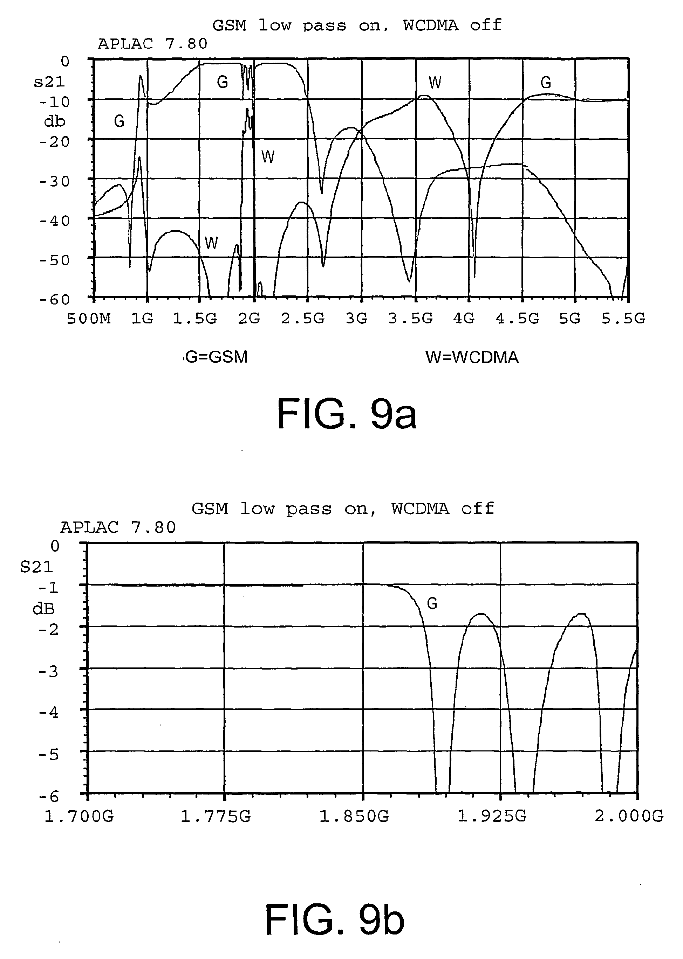

It should be noted that the switches can also be configured into a series connection. In this case the phase delay through the filter+matching network should be an even multiple of 180 degrees. Alternatively, one can also have both series and shunt switches, as long as the filters are properly matched. In this case, the problem of a blocking signal mixing with its own Tx signal (generally only a problem in the CDMA and W-CDMA standards) can be solved since only the signals at the Tx frequency can enter the switch from antenna. Accordingly, these signals would mix to DC, but not with its own Rx band. Exemplary responses of the GSM and WCDMA paths with different switches being "on" are shown in Figures 8a - 9b. Figures 8a and 8b show the W-CDMA and GSM responses at different scales when the shunt switch 265 at the GSM filter 266 is biased "on". Figures 9a and 9b show the W-CDMA and GSM responses at different scales when the shunt switch 345 at the W-CDMA filter 346 is biased "on". Even though each of the Tx paths is shown with a delay (=phase shifter) and the filter, in practice, the filter and the matching elements can be designed so that the phase shifter is included in the filter itself. The separate delays are shown to emphasize that a certain phase delay through each tx path at the center frequency needs to be achieved.

It should also be noted that, in Figures 4a and 4b, the shunt switches **115, 135, 155, 225, 245** at the outputs of the Rx-filters **116,136,156, 226, 246.** The separate Rx and Tx antennas together with the steep Rx filters provide enough Tx to Rx isolation, rendering any additional Tx/Rx switching for a given band, in principle, unnecessary. However, the problem of cross-band isolation still needs to be solved.

The problem of cross-band isolation arises from the fact that, even though the Tx and Rx bands of a given standard do not overlap, there may be (and usually are) Tx frequencies in a multiband engine that overlap with other Rx frequencies. Moreover, there are also out of band blocking signals that need to be attenuated. For example, in the GSM 1900 standard, the Tx frequencies range from 1850 to 1910MHz and the corresponding Rx range from 1930 to 1990MHz. In that case, the Tx and Rx bands are separated by 20MHz. However, this Tx band does partially overlap with the GSM 1800 Rx, which is at 1805 to 1880MHz. This implies that although the signal from the Tx antenna can be correctly attenuated in the GSM 1900Rx filter, it will be able to pass through the GSM 1800 Rx filter. From the system point of view this is problematic because the next element in the Rx chain is usually an LNA (low noise amplifier), which is already integrated into the RF-ASIC. Even when the LNA for the 1800GSM is in the "off" state, fairly high signal levels of the 1800GSM may exist in the bond wires and cause interference in the operation of the RF-ASIC. This is especially true for modem RF-ASIC that operates on very low supply voltages like 1.2V. A high level input signal may even damage the RF-ASIC. The only attenuation in these cross-band situations is provided by the separate antennas and this is typically only around 10 to 15dB, which is not enough. These potential cross band frequencies are shown in Figure 3 for the case 1800, 1900GSM and the European W-CDMA.

It should also be noted that the separate antennas do not significantly help against out-of-band blocking signals that enter the Rx antenna during the Rx mode. These signals are typically attenuated by the corresponding Rx filter (the very reason for the Rx filter). If there is another Rx filter in shunt, this filter allows blocking signals on its passband to propagate to the RF-ASIC. To solve this problem LNAs that are not integrated to the RF-ASIC can be used. Alternatively, switches can be disposed at the input of the filters. Such placement of switches would make the matching a bit easier. Unfortunately, the mixing products could turn out to be a problem.

To solve the problem associated with the out-of-band blocking signals, the present invention places the switches at the output of the filters, either in shunt as shown in Figure 4, or in series. The shunt switches can be connected to ground, but it is also enough just to short the balanced output of a filter to achieve very high attenuation, effectively "disconnecting" the filter. As such, shunt switches can be biased "on" to turn "off" the desired filters. In contrast, if series switches are used, they would be biased "on" to turn the respective filter to "on".

As mentioned earlier, the U.S. front-end as shown in Figure 5 can be derived from the EU version simply by changing the two 2GHz Tx filters and their matching elements. The 2GHz GSM Tx filter **266** in block 804 (Figure 4c) is replaced by two selective band pass filters **552** and **554,** one for the GSM1800 and another for the GSM1900. If these band pass filters are properly designed, they will be able to provide enough attenuation at the corresponding Rx-bands. As such, they can also be used for the CDMA1900Tx and the new US standard (with Tx at 1800MHz). The switching of the PAs **522** and **524,** in this case, significantly depends on the PA architecture. It depends on whether one GSM can be used to amplify all of these bands and modulation types, or whether there are separate (W)CDMA and GSM PAs for better efficiency reasons, for example. However the filters and the first switches (again either in shunt or series) can be used in any case. Similarly the Rx1900 can be designed such that it supports both the GSM1900 and the CDAM1900 requirements.

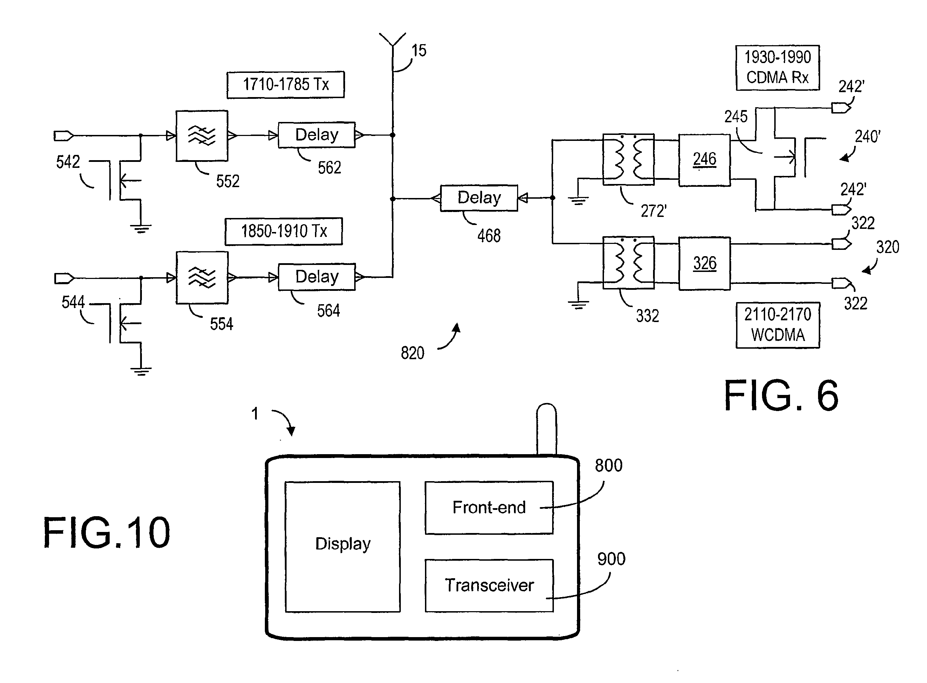

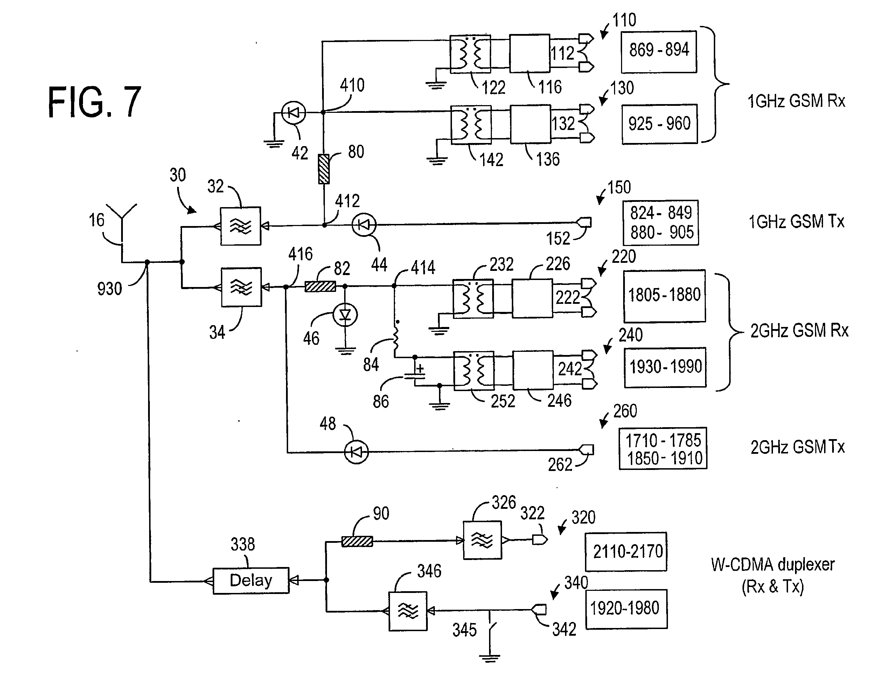

It should be appreciated that Figures 4 and 5 are just two embodiments of the present invention, illustrating the principle of how front-ends can be designed with switches being disposed after the filters and with the inputs being matched to one common node. Other embodiments that use the principle of the present invention are shown in Figures 6 and 7.

Figure 6 shows a duplexer **820** wherein a common antenna **15** is used for both Tx and Rx designed to be compatible with the existing type 3 or 4 band GSM antenna switch modules. This duplexer can support even two different frequency ranges. In Figure 6, all the switches **245, 542** and **544** are placed at the far side of the filters **246, 552** and **554,** in reference to the antenna 15.

Figure 7 is a modification of the conventional front-end that uses a diplexer **30** with harmonic filters for 1 and 2GHz Tx. As shown in Figure 7, a switch **345** placed at the far end of the filter **346** is used for switching in the W-CDMA duplexer. The duplexer shares a common node **930** and the antenna **16** with the diplexer **30.**

The advantages of the present invention depend on the specific band combination and implementation. In general, one of the major advantages is that the principle, according to the present invention, gives a new option of including and designing front-ends that have WCDMA or CDMA together with GSM bands. Depending on the combination of bands, the present invention also facilitates the "re-use" of filters, i.e. different standards can be supported with the same filter, which, in certain cases, reduces the number of filters needed. As such, the front-end can be simplified and be more cost-effective, compared with existing solutions. The two architectures shown in Figures 4 and 5 also, by default, support downlink MIMO and diversity, which can be achieved by simply duplicating the 2GHz Rx-part.

In order to illustrate the advantages of the present invention, Figure 8a shows the responses of the GSM Tx and W-CDMA Tx branches when the shunt switch at the GSM filter output is biased "on". Figure 8b shows the same response in more detail.

Likewise, Figure 9a shows the responses of the GSM Tx and W-CDMA Tx branches when the shunt switch at the W-CDMA filter output is biased "on". Figure 9b shows the same response in more detail.

One disadvantage associated with the present invention is that the switches in the TX path may increase the losses somewhat, especially in the WCDMA because currently the duplexer has no switches.

The front-end modules as shown in Figures 4, 5, 6 and 7 of the present invention, can be used in a communication device, such as a mobile phone or mobile terminal, as shown in Figure 10. As shown in Figure 10, the communication device 1 comprises a multiband front-end module **800,** which can be any one of the front end modules as shown in Figures 5 to 7. The front-end module **800** has a plurality of transmit and receive paths, operatively connected to the transceiver **900.**

Although the invention has been described with respect to a preferred embodiment thereof, it will be understood by those skilled in the art that the foregoing and various other changes, omissions and deviations in the form and detail thereof may be made without departing from the scope of this invention as defined in the appended claims.

## Claims

1. Apparatus (800; 802; 803; 804; 812; 813; 814) comprising:
a first bandpass filter (226; 156; 346) disposed in a first signal path (220; 150) for filtering radio frequency signals in a first frequency band, the first bandpass filter having a first end and a second end, the first end operatively connectable to one or more antennas (12; 13; 14);
a second bandpass filter (246; 116; 326) disposed in a second signal path (240; 110) for filtering radio frequency signals in a second frequency band different from the first frequency band; the second bandpass filter operatively connectable to said one or more antennas; and
a switch (225; 155; 345) having a first, on state and a second, off state disposed at the second end of the first bandpass filter independent of the second signal path for enabling or disabling the first signal path.

2. Apparatus according to claim 1, further comprising:
a matching element (158) disposed between the first end of the first bandpass filter and said one or more antenna.

3. Apparatus according to claim 2, wherein the first signal path comprises a transmit path (150) and the second signal path comprises a receive path (110).

4. Apparatus according to claim 1, wherein the first signal path comprises a first receive path (220) and the second signal path comprises a second receive path (240), and wherein the second bandpass filter has a first end and a second end, the first end of the second bandpass filter operatively connectable to said one or more antennas, said apparatus further comprising:
a further switch (245) disposed at the second end of the second bandpass filter for enabling or disabling the second signal path.

5. Apparatus according to claim 4, further comprising a balun (272) operatively connectable to said one or more antennas, and wherein both the first end of the first bandpass filter and the first end of the second bandpass filter are operatively connectable to said one or more antennas via the balun.

6. Apparatus according to claim 5, wherein the balun (272) has a first balun end and a second balun end, the first balun end operatively connectable to said one or more antennas, the second balun end connected to the first end of the first filter and wherein the second balun end is also connected to the first end of the second filter, said apparatus further comprising:
a second switch (245) disposed in the second receive path and operatively connected to the second end of the second filter.

7. Apparatus according to claim 6, wherein
the first frequency band has a frequency range substantially between 1805MHz and 1880MHz, and
the second frequency band has a frequency range substantially between 1930MHz and 1990MHz.

8. Apparatus according to claim 6, wherein
the first frequency band has a frequency range substantially between 869MHz and 894MHz, and
the second frequency band has a frequency range substantially between 925MHz and 960MHz.

9. Apparatus according to claim 8, further comprising:
a matching element (158) operatively connectable to said one or more antennas;
a third bandpass filter (156) disposed in a transmit path (150) for filtering signals in a third frequency band, the third bandpass filter having a first end and a second end, the first end operatively connected to the matching element; and
a third switch (155) disposed in the transmit path and operatively connected to the second end of the third bandpass filter.

10. Apparatus according to claim 9, wherein the third frequency band has a frequency range substantially between 824MHz and 849MHz.

11. Apparatus according to claim 9, wherein the third frequency band has a frequency range substantially between 880MHz and 905MHz.

12. Apparatus according to claim 7, further comprising:
a matching element (268; 564) operatively connectable to said one or more antennas;
a third bandpass filter (266; 554) disposed in a transmit path for filtering signals in a third frequency band, the third bandpass filter having a first end and a second end, the first end operatively connected to the matching element; and
a third switch (265; 544) disposed in the transmit path and operatively connected to the second end of the third bandpass filter.

13. Apparatus according to claim 12, wherein the third frequency band has a frequency range substantially between 1710MHz and 1785MHz.

14. Apparatus according to claim 12, wherein the third frequency band has a frequency range substantially between 1850MHz and 1910MHz.

15. Apparatus according to claim 12, further comprising:
a further matching element (348; 562) operatively connectable to said one or more antennas;
a fourth bandpass filter (346; 552) disposed in a further transmit path (340) for filtering signals in a fourth frequency band, the fourth bandpass filter having a first end and a second end, the first end operatively connected to the further matching element; and
a fourth switch (345; 542) disposed in the further transmit path and operatively connected to the second end of the fourth bandpass filter.

16. Apparatus according to claim 15, wherein the third frequency band has a third frequency range substantially between 1710MHz and 1785MHz, and the fourth frequency range substantially between 1850 and 1910MHz.

17. Apparatus according to claim 15, wherein the third frequency band has a third frequency range substantially between 1920MHz and 1980MHz, and the fourth frequency range substantially between 1710 and 1910MHz.

18. Apparatus according to claim 16, further comprising:
a further balun (332); and
a fifth bandpass filter (326) disposed in another receive path (320) for filtering signals in a fifth frequency band, the fifth bandpass filter operatively connectable to said one or more antennas via the further balun, wherein the fifth frequency band has a frequency range substantially between 2110MHz and 2170MHz.

19. Apparatus according to claim 17, further comprising:
a further balun (332); and
a fifth bandpass filter (326) disposed in another receive path (320) for filtering signals in a fifth frequency band, the fifth bandpass filter operatively connectable to said one or more antennas via the further balun, wherein the fifth frequency band has a frequency range substantially between 2110MHz and 2170MHz..

20. Apparatus according to claim 18, wherein the apparatus is operated in a first mode in code-division multiplex access fashion and a second mode in GSM, said apparatus further comprising:
a first amplifier (522) for amplifying signals in the first mode;
a second amplifier (524) for amplifying signals in the second mode; and
a group of further switches including a first, a second, a third and a fourth further switches (531, 532, 533, 534), each having a first end and a second end, wherein
the first end of the first further switch is operatively connectable to the transmit path (510), and the second end of the first further switch is operatively connected to the first amplifier;
the first end of the second further switch is operatively connectable to the transmit path (510), and the second end of the second further switch is operatively connected to the second amplifier;
the first end of the third further switch is operatively connectable to the further transmit path (520), and the second end of the third further switch is operatively connected to the first amplifier; and
the first end of the first further switch is operatively connectable to the further transmit path (520), and the second end of the fourth further switch is operatively connected to the second amplifier.

21. Apparatus according to claim 5, further comprising:
a matching element disposed between said one or more antennas and the balun, the matching element having a first matching element end connectable to said one or more antenna and a second matching element end connected to the balun; and
a further balun disposed between the matching element and the second bandpass filter, the further balun having a first balun end connected to the second matching element end and a second balun end connected to the second bandpass filter.

22. Apparatus according to claim 21, wherein the first frequency band has a first frequency range substantially between 1930MHz and 1990MHz, and the second frequency band has a second frequency range substantially between 2110MHz and 2170MHz.

23. Apparatus according to claim 21, further comprising:
a second matching element (562);
a third bandpass filter (552) disposed in a transmit path (510) for filtering signals in the third frequency band, the third bandpass filter having a first end and a second end, the first end operatively connectable to said one or more antennas through the second matching element; and
a second switch (542) connected to the second end of the third bandpass filter.

24. Apparatus according to claim 23, further comprising:
a third matching element (564);
a fourth bandpass filter (554) disposed in a further transmit path (520) for filtering signals in the fourth frequency band, the fourth bandpass filter having a first end and a second end, the first end operatively connectable to said one or more antennas through the third matching element; and
a second switch (544) connected to the second end of the fourth bandpass filter.

25. Apparatus according to claim 23, wherein
the first frequency band has a first frequency range substantially between 1930MHz and 1990MHz;
the second frequency band has a second frequency range substantially between 2110MHz and 2170MHz;
the third frequency band has a third frequency range substantially between 1710MHz and 1785MHz; and
the fourth frequency band has a fourth frequency range substantially between 1850MHz and 1910MHz.

26. A communications device comprising:
one or more antennas (12; 13; 14) for conveying radio frequency signals; and
apparatus (802; 803; 804; 812; 813; 814) according to any preceding claim.

27. A mobile terminal (1) comprising a communications device according to claim 26.

28. A method comprising:
bandpass filtering radio frequency signals conveyed via a first signal path to or from one or more antennas so as to provide signals in a first frequency band;
bandpass filtering radio frequency signals conveyed via a second signal path to or from the one or more antennas so as to provide signals in a second frequency band different from the first frequency band; and
switching the signals conveyed via the first signal path independently of the second signal path using a switch having a first, on state and a second, off state so as to selectively enable the first signal path, wherein the signals conveyed from the one or more antennas are switched after the filtering thereof and the signals conveyed to the one or more antennas are switched before the filtering thereof.

29. A method according to claim 28, wherein the first signal path comprises a transmit path and the second signal path comprises a receive path, said method further comprising:
delaying the signals conveyed in the first signal path after the filtering thereof.

30. A method according to claim 28, wherein the first signal path comprises a first receive path and the second signal path comprises a second receive path, said method further comprising:
switching the signals conveyed via the second signal path so as to selectively enable the second signal path, wherein the signals are switched after the filtering thereof.

31. A method according to claim 30, further comprising:
balancing using a balun the signals conveyed via the first and second signal paths before the filtering thereof.

## Patentansprüche

1. Vorrichtung (800, 802, 803, 804, 812, 813, 814), umfassend:
einen ersten Bandpassfilter (226, 156, 346), der in einem ersten Signalpfad (220, 150) angeordnet ist, um Funkfrequenzsignale in einem ersten Frequenzband zu filtern,
wobei der erste Bandpassfilter ein erstes Ende und ein zweites Ende aufweist, und
wobei das erste Ende betriebsfähig mit einer oder mit mehreren Antennen (12, 13, 14) verbunden werden kann;
einen zweiten Bandpassfilter (246, 116, 326), der in einem zweiten Signalpfad (240, 110) angeordnet ist, um Funkfrequenzsignale in einem zweiten Frequenzband zu filtern, das sich von dem ersten Frequenzband unterscheidet, wobei der zweite Bandpassfilter betriebsfähig mit der einen oder mit den mehreren Antennen verbunden werden kann; und
einen Schalter (225, 155, 345), der einen ersten, eingeschalteten Zustand und einen zweiten, ausgeschalteten Zustand aufweist, der an dem zweiten Ende des ersten Bandpassfilters unabhängig von dem zweiten Signalpfad angeordnet ist, um den ersten Signalpfad zu aktivieren oder zu desaktivieren.

2. Vorrichtung gemäß Anspruch 1, weiter umfassend:
ein Anpassungselement (158), das zwischen dem ersten Ende des ersten Bandpassfilters und der einen oder den mehreren Antennen angeordnet ist.

3. Vorrichtung gemäß Anspruch 2, wobei der erste Signalpfad einen Sendepfad (150) und der zweite Signalpfad einen Empfangspfad (110) umfasst.

4. Vorrichtung gemäß Anspruch 1, wobei der erste Signalpfad einen ersten Empfangspfad (220) und der zweite Signalpfad einen zweiten Empfangspfad (240) umfasst, und wobei der zweite Bandpassfilter ein erstes Ende und ein zweites Ende aufweist, wobei das erste Ende des zweiten Bandpassfilters betriebsfähig mit der einen oder den mehreren Antennen verbunden werden kann, wobei die Vorrichtung weiter umfasst:
einen weiteren Schalter (245), der an dem zweiten Ende des zweiten Bandpassfilters angeordnet ist, um den zweiten Signalpfad zu aktivieren oder zu deaktivieren.

5. Vorrichtung gemäß Anspruch 4, weiter umfassend:
einen Balun (272), der betriebsfähig mit der einen oder den mehreren Antennen verbunden werden kann, und wobei sowohl das erste Ende des ersten Bandpassfilters als auch das erste Ende des zweiten Bandpassfilters betriebsfähig über den Balun mit der einen oder den mehreren Antennen verbunden werden können.

6. Vorrichtung gemäß Anspruch 5, wobei der Balun (272) ein erstes Ende des Baluns und ein zweites Ende des Baluns aufweist, wobei das erste Ende des Baluns betriebsfähig mit der einen oder den mehreren Antennen verbunden werden kann, wobei das zweite Ende des Baluns mit dem ersten Ende des ersten Filters verbunden ist, und wobei das zweite Ende des Baluns ebenfalls mit dem ersten Ende des zweiten Filters verbunden ist, wobei die Vorrichtung weiter umfasst:
einen zweiten Schalter (245), der in dem zweiten Empfangspfad angeordnet ist und betriebsfähig mit dem zweiten Ende des zweiten Filters verbunden ist.

7. Vorrichtung gemäß Anspruch 6, wobei
das erste Frequenzband einen Frequenzbereich im Wesentlichen zwischen 1805 MHz und 1880 MHz aufweist, und
das zweite Frequenzband einen Frequenzbereich im Wesentlichen zwischen 1930 MHz und 1990 MHz aufweist.

8. Vorrichtung gemäß Anspruch 6, wobei
das erste Frequenzband einen Frequenzbereich im Wesentlichen zwischen 869 MHz und 894 MHz aufweist, und
das zweite Frequenzband einen Frequenzbereich im Wesentlichen zwischen 925 MHz und 960 MHz aufweist.

9. Vorrichtung gemäß Anspruch 8, weiter umfassend:
ein Anpassungselement (158), das betriebsfähig mit der einen oder den mehreren Antennen verbunden werden kann,
einen dritten Bandpassfilter (156), der in einem Sendepfad (150) zum Filtern von Signalen in einem dritten Frequenzband angeordnet ist, wobei der dritte Bandpassfilter ein erstes Ende und ein zweites Ende aufweist, wobei das erste Ende betriebsfähig mit dem Anpassungselement verbunden ist, und
einen dritten Schalter (155), der in dem Sendepfad angeordnet ist und betriebsfähig mit dem zweiten Ende des dritten Bandpassfilters verbunden ist.

10. Vorrichtung gemäß Anspruch 9, wobei
das dritte Frequenzband einen Frequenzbereich im Wesentlichen zwischen 824 MHz und 849 MHz aufweist.

11. Vorrichtung gemäß Anspruch 9, wobei
das dritte Frequenzband einen Frequenzbereich im Wesentlichen zwischen 880 MHz und 905 MHz aufweist.

12. Vorrichtung gemäß Anspruch 7, weiter umfassend:
ein Anpassungselement (268, 564), das betriebsfähig mit der einen oder den mehreren Antennen verbunden werden kann,
einen dritten Bandpassfilter (266, 554), der in einem Sendepfad zum Filtern von Signalen in einem dritten Frequenzband angeordnet ist, wobei der dritte Bandpassfilter ein erstes Ende und ein zweites Ende aufweist, wobei das erste Ende betriebsfähig mit dem Anpassungselement verbunden ist, und
einen dritten Schalter (265, 544), der in dem Sendepfad angeordnet ist und betriebsfähig mit dem zweiten Ende des dritten Bandpassfilters verbunden ist.

13. Vorrichtung gemäß Anspruch 12, wobei
das dritte Frequenzband einen Frequenzbereich im Wesentlichen zwischen 1710 MHz und 1785 MHz aufweist.

14. Vorrichtung gemäß Anspruch 12, wobei
das dritte Frequenzband einen Frequenzbereich im Wesentlichen zwischen 1850 MHz und 1910 MHz aufweist.

15. Vorrichtung gemäß Anspruch 12, weiter umfassend:
ein weiteres Anpassungselement (348, 562), das betriebsfähig mit der einen oder den mehreren Antennen verbunden werden kann,
einen vierten Bandpassfilter (346, 552), der in einem weiteren Sendepfad (340) zum Filtern von Signalen in einem vierten Frequenzband angeordnet ist, wobei der vierte Bandpassfilter ein erstes Ende und ein zweites Ende aufweist, wobei das erste Ende betriebsfähig mit dem weiteren Anpassungselement verbunden ist, und
einen vierten Schalter (345, 542), der in dem weiteren Sendepfad angeordnet ist und betriebsfähig mit dem zweiten Ende des vierten Bandpassfilters verbunden ist.

16. Vorrichtung gemäß Anspruch 15, wobei
das dritte Frequenzband einen dritten Frequenzbereich im Wesentlichen zwischen 1710 MHz und 1785 MHz aufweist, und
der vierte Frequenzbereich im Wesentlichen zwischen 1850 MHz und 1910 MHz ist.

17. Vorrichtung gemäß Anspruch 15, wobei
das dritte Frequenzband einen dritten Frequenzbereich im Wesentlichen zwischen 1920 MHz und 1980 MHz aufweist, und
der vierten Frequenzbereich im Wesentlichen zwischen 1710 MHz und 1910 MHz ist.

18. Vorrichtung gemäß Anspruch 16, weiter umfassend:
einen weiteren Balun (332), und
einen fünften Bandpassfilter (326), der in einem anderen Empfangspfad (320) zum Filtern von Signalen in einem fünften Frequenzband angeordnet ist, wobei der fünfte Bandpassfilter betriebsfähig über den Balun mit der einen oder den mehreren Antennen verbunden werden kann, wobei das fünfte Frequenzband einen Frequenzbereich im Wesentlichen zwischen 2110 Mhz und 2170 MHz aufweist.

19. Vorrichtung gemäß Anspruch 17, weiter umfassend:
einen weiteren Balun (332), und
einen fünften Bandpassfilter (326), der in einem anderen Empfangspfad (320) zum Filtern von Signalen in einem fünften Frequenzband angeordnet ist, wobei der fünften Bandpassfilter betriebsfähig über den Balun mit der einen oder den mehreren Antennen verbunden werden kann, wobei das fünfte Frequenzband einen Frequenzbereich im Wesentlichen zwischen 2110 Mhz und 2170 MHz aufweist.

20. Vorrichtung gemäß Anspruch 18, wobei die Vorrichtung in einem ersten Modus in einer Art eines Codemultiplexverfahrens und in einem zweiten Modus in GSM betrieben wird, wobei die Vorrichtung weiter umfasst:
einen ersten Verstärker (522) zum Verstärken von Signalen in dem ersten Modus,
einen zweiten Verstärker (524) zum Verstärken von Signalen in dem zweiten Modus,
und
eine Gruppe von weiteren Schaltern, die einen ersten, einen zweiten, einen dritten und
einen vierten, weiteren Schalter (521, 532, 533, 534) einschließt, wobei jeder ein erstes Ende und ein zweites Ende aufweist, wobei
das erste Ende des ersten weiteren Schalters betriebsfähig mit dem Sendepfad (510) verbunden werden kann und das zweite Ende des ersten weiteren Schalters betriebsfähig mit dem ersten Verstärker verbunden ist,
das erste Ende des zweiten weiteren Schalters betriebsfähig mit dem Sendepfad (510) verbunden werden kann und das zweite Ende des zweiten weiteren Schalters betriebsfähig mit dem zweiten Verstärker verbunden ist,
das erste Ende des dritten weiteren Schalters betriebsfähig mit dem weiteren Sendepfad (520) verbunden werden kann und das zweite Ende des dritten weiteren Schalters betriebsfähig mit dem ersten Verstärker verbunden ist, und
das erste Ende des ersten weiteren Schalters betriebsfähig mit dem weiteren Sendepfad (520) verbunden werden kann und das zweite Ende des vierten weiteren Schalters betriebsfähig mit dem zweiten Verstärker verbunden ist.

21. Vorrichtung gemäß Anspruch 5, weiter umfassend:
ein Anpassungselement, das zwischen den ein oder mehreren Antennen und dem Balun angeordnet ist, wobei das Anpassungselement ein erstes Ende des Anpassungselements aufweist, das mit der einen oder den mehreren Antennen verbunden werden kann und ein zweites Ende des Anpassungselements aufweist, das mit dem Balun verbunden ist; und
einen weiteren Balun, der zwischen dem Anpassungselement und dem zweiten Bandpassfilter angeordnet ist, wobei der weitere Balun mit einem ersten Ende des Baluns mit dem zweiten Ende des Anpassungselements verbunden ist und mit einem zweiten Ende des Baluns mit dem zweiten Bandpassfilter verbunden ist.

22. Vorrichtung gemäß Anspruch 21, wobei
das erste Frequenzband einen ersten Frequenzbereich im Wesentlichen zwischen 1930 MHz und 1990 MHz aufweist, und
das zweite Frequenzband einen zweiten Frequenzbereich im Wesentlichen zwischen 2110 MHz und 2170 MHz aufweist.

23. Vorrichtung gemäß Anspruch 21, weiter umfassend:
ein zweites Anpassungselement (562),
einen dritten Bandpassfilter (552), der in einem Sendepfad (110) zum Filtern von Signalen in dem dritten Frequenzband angeordnet ist, wobei der dritte Bandpassfilter ein erstes Ende und ein zweites Ende aufweist, wobei das erste Ende betriebsfähig durch das zweite Anpassungselement mit der einen oder den mehreren Antennen verbunden werden kann, und
einen zweiten Schalter (542), der mit dem zweiten Ende des dritten Bandpassfilters verbunden ist.

24. Vorrichtung gemäß Anspruch 23, weiter umfassend:
ein drittes Anpassungselement (564),
einen vierten Bandpassfilter (554), der in einem weiteren Sendepfad (520) zum Filtern von Signalen in dem vierten Frequenzband angeordnet ist, wobei der vierte Bandpassfilter ein erstes Ende und ein zweites Ende aufweist, wobei das erste Ende durch das dritte Anpassungselement betriebsfähig mit der einen oder den mehreren Antennen verbunden werden kann, und
einen zweiten Schalter (544), der mit dem zweiten Ende des vierten Bandpassfilters verbunden ist.

25. Vorrichtung gemäß Anspruch 23, wobei
das erste Frequenzband einen ersten Frequenzbereich im Wesentlichen zwischen 1930 MHz und 1990 MHz aufweist,
das zweite Frequenzband einen zweiten Frequenzbereich im Wesentlichen zwischen 2110 MHz und 2170 MHz aufweist,
das dritte Frequenzband einen dritten Frequenzbereich im Wesentlichen zwischen 1710 MHz und 1785 MHz aufweist, und
das zweite Frequenzband einen vierten Frequenzbereich im Wesentlichen zwischen 1850 MHz und 1910 MHz aufweist.

26. Kommunikationsvorrichtung, umfassend:
eine oder mehrere Antennen (12, 13, 14) zum Übertragen von Funkfrequenzsignalen,
und eine Vorrichtung (802, 803, 804, 812, 813, 814) gemäß einem der vorstehenden Ansprüche.

27. Mobiles Endgerät (1), umfassend eine Kommunikationsvorrichtung gemäß Anspruch 26.

28. Verfahren, umfassend:
Bandpassfiltern von Funkfrequenzsignalen, die über einen ersten Signalpfad an oder
von einer oder von mehreren Antennen übertragen werden, um Signale in einem ersten Frequenzband bereitzustellen,
Bandpassfiltern von Funkfrequenzsignalen, die über einen zweiten Signalpfad an oder
von der oder von den mehreren Antennen übertragen werden, um Signale in einem zweiten Frequenzband bereitzustellen, das sich von dem ersten Frequenzband unterscheidet, und
Schalten der Signale, die über den ersten Signalpfad übertragen werden, unabhängig von dem ersten Signalpfad, unter Verwendung eines Schalters, der einen ersten, eingeschalteten Zustand und einen zweiten, ausgeschalteten Zustand aufweist, um selektiv den ersten Signalpfad zu aktivieren, wobei die Signale, die von der einen oder
den mehreren Antennen übertragen werden, nach deren Filterung geschaltet werden,
und die Signale, die an die eine oder die mehreren Antennen übertragen werden, vor deren Filterung geschaltet werden.

29. Verfahren gemäß Anspruch 28, wobei der erste Signalpfad einen Sendepfad und der zweite Signalpfad einen Empfangspfad umfasst, wobei das Verfahren weiter umfasst:
Verzögern der Signale, die in dem ersten Signalpfad übertragen werden, nach deren Filterung.

30. Verfahren gemäß Anspruch 28, wobei der erste Signalpfad einen ersten Empfangspfad umfasst und der zweite Signalpfad einen zweiten Empfangspfad umfasst, und wobei das Verfahren weiter umfasst:
Schalten der Signale, die über den zweiten Signalpfad übertragen werden, um so selektiv den zweiten Signalpfad zu aktivieren, wobei die Signale nach deren Filterung geschaltet werden.

31. Verfahren gemäß Anspruch 30, weiter umfassend:
Abgleichen der Signale, die über den ersten Signalpfad und den zweiten Signalpfad übertragen werden, vor deren Filterung, unter Verwendung eines Baluns.

## Revendications

1. Appareil (800 ; 802 ; 803 ; 804 ; 812 ; 813 ; 814) comprenant :
un premier filtre passe-bande (226 ; 156 ; 346) disposé dans un premier trajet de signal (220 ; 150) pour filtrer des signaux de radiofréquence dans une première bande de fréquence, le premier filtre passe-bande ayant une première extrémité et une deuxième extrémité, la première extrémité fonctionnellement raccordable à une ou plusieurs antennes (12 ; 13 ; 14) ;
un deuxième filtre passe-bande (246 ; 116 ; 326) disposé dans un deuxième trajet de signal (240 ; 110) pour filtrer des signaux de radiofréquence dans une deuxième bande de fréquence différente de la première bande de fréquence ; le deuxième filtre passe-bande étant fonctionnellement raccordable auxdites une ou plusieurs antennes ; et
un commutateur (225 ; 155 ; 345) ayant un premier état activé et un deuxième état désactivé disposé à la deuxième extrémité du premier filtre passe-bande indépendant du deuxième trajet de signal pour activer ou désactiver le premier trajet de signal.

2. Appareil selon la revendication 1, comprenant en outre :
un élément d'adaptation (158) disposé entre la première extrémité du premier filtre passe-bande et lesdites une ou plusieurs antennes.

3. Appareil selon la revendication 2, dans lequel le premier trajet de signal comprend un trajet de transmission (150) et le deuxième trajet de signal comprend un chemin de réception (110).

4. Appareil selon la revendication 1, dans lequel le premier trajet de signal comprend un premier chemin de réception (220) et le deuxième trajet de signal comprend un deuxième chemin de réception (240), et dans lequel le deuxième filtre passe-bande a une première extrémité et une deuxième extrémité, la première extrémité du deuxième filtre passe-bande étant fonctionnellement raccordable auxdites une ou plusieurs antennes, ledit appareil comprenant en outre :
un autre commutateur (245) disposé à la deuxième extrémité du deuxième filtre passe-bande pour activer ou désactiver le deuxième trajet de signal.

5. Appareil selon la revendication 4, comprenant en outre un symétriseur (272) pouvant être fonctionnellement raccordé auxdites une ou plusieurs antennes, et dans lequel la première extrémité du premier filtre passe-bande et la première extrémité du deuxième filtre passe-bande sont fonctionnellement raccordable auxdites une ou plusieurs antennes via le symétriseur.

6. Appareil selon la revendication 5, dans lequel le symétriseur (272) a une première extrémité de symétriseur et une deuxième extrémité de symétriseur, la première extrémité de symétriseur étant fonctionnellement raccordable auxdites une ou plusieurs antennes, la deuxième extrémité de symétriseur raccordée à la première extrémité du premier filtre et dans lequel la deuxième extrémité de symétriseur est en outre raccordée à la première extrémité du deuxième filtre, ledit appareil comprenant en outre :
un deuxième commutateur (245) disposé dans le deuxième chemin de réception et fonctionnellement raccordé à la deuxième extrémité du deuxième filtre.

7. Appareil selon la revendication 6, dans lequel
la première bande de fréquence a une plage de fréquence sensiblement comprise entre 1805 MHz et 1880 MHz, et
la deuxième bande de fréquence a une plage de fréquence sensiblement comprise entre 1930 MHz et 1990 MHz.

8. Appareil selon la revendication 6, dans lequel
la première bande de fréquence a une plage de fréquence sensiblement comprise entre 869 MHz et 894 MHz, et
la deuxième bande de fréquence a une plage de fréquence sensiblement comprise entre 925 MHz et 960 MHz.

9. Appareil selon la revendication 8, comprenant en outre ;
un élément d'adaptation (158) fonctionnellement raccordable auxdites une ou plusieurs antennes ;
un troisième filtre passe-bande (156) disposé dans un trajet de transmission (150) pour filtrer des signaux dans une troisième bande de fréquence, le troisième filtre passe-bande ayant une première extrémité et une deuxième extrémité, la première extrémité étant fonctionnellement raccordée à l'élément d' adaptation ; et
un troisième commutateur (155) disposé dans le trajet de transmission et fonctionnellement raccordé à la deuxième extrémité du troisième filtre passe-bande.

10. Appareil selon la revendication 9, dans lequel la troisième bande de fréquence a une plage de fréquence sensiblement comprise entre 824 MHz et 849 MHz.

11. Appareil selon la revendication 9, dans lequel la troisième bande de fréquence a une plage de fréquence sensiblement comprise entre 880 MHz et 905 MHz.

12. Appareil selon la revendication 7, comprenant en outre :
un élément d'adaptation (268 ; 564) fonctionnellement raccordable auxdites une ou plusieurs antennes ;
un troisième filtre passe-bande (266 ; 554) disposé dans un trajet de transmission pour filtrer des signaux dans une troisième bande de fréquence, le troisième filtre passe-bande ayant une première extrémité et une deuxième extrémité, la première extrémité étant fonctionnellement raccordée à l'élément d'adaptation ; et un troisième commutateur (265 ; 544) disposé dans le trajet de transmission et fonctionnellement raccordé à la deuxième extrémité du troisième filtre passe-bande.

13. Appareil selon la revendication 12, dans lequel la troisième bande de fréquence a une plage de fréquence sensiblement comprise entre 1710 MHz et 1785 MHz.

14. Appareil selon la revendication 12, dans lequel la troisième bande de fréquence a une plage de fréquence sensiblement comprise entre 1850 MHz et 1910 MHz.

15. Appareil selon la revendication 12, comprenant en outre :
un autre élément d'adaptation (348 ; 562) fonctionnellement raccordable auxdites une ou plusieurs antennes ;
un quatrième filtre passe-bande (346 ; 552) disposé dans un autre trajet de transmission (340) pour filtrer des signaux dans une quatrième bande de fréquence, le quatrième filtre passe-bande ayant une première extrémité et une deuxième extrémité, la première extrémité étant fonctionnellement raccordée à l'autre élément d'adaptation ; et
un quatrième commutateur (345 ; 542) disposé dans l'autre trajet de transmission et fonctionnellement raccordé à la deuxième extrémité du quatrième filtre passe-bande.

16. Appareil selon la revendication 15, dans lequel la troisième bande de fréquence a une troisième plage de fréquence sensiblement comprise entre 1710 MHz et 1785 MHz, et la quatrième plage de fréquence sensiblement comprise entre 1850 et 1910 MHz.

17. Appareil selon la revendication 15, dans lequel la troisième bande de fréquence a une troisième plage de fréquence sensiblement comprise entre 1920 MHz et 1980 MHz, et la quatrième plage de fréquence sensiblement comprise entre 1710 et 1910 MHz.

18. Appareil selon la revendication 16, comprenant en outre :
un autre symétriseur (332) ; et
un cinquième filtre passe-bande (326) disposé dans un autre chemin de réception (320) pour filtrer des signaux dans une cinquième bande de fréquence, le cinquième filtre passe-bande pouvant être fonctionnellement raccordé auxdites une ou plusieurs antennes via l'autre symétriseur, dans lequel la cinquième bande de fréquence a une plage de fréquence sensiblement comprise entre 2110 MHz et 2170 MHz.

19. Appareil selon la revendication 17, comprenant en outre :
un autre symétriseur (332) ; et
un cinquième filtre passe-bande (326) disposé dans un autre chemin de réception (320) pour filtrer des signaux dans une cinquième bande de fréquence, le cinquième filtre passe-bande pouvant être fonctionnellement raccordé auxdites une ou plusieurs antennes via l'autre symétriseur, dans lequel la cinquième bande de fréquence a une plage de fréquence sensiblement comprise entre 2110 MHz et 2170 MHz.

20. Appareil selon la revendication 18, dans lequel l'appareil est activé dans un premier mode dans une configuration d'accès par multiplexage par répartition en code et un deuxième mode en GSM, ledit appareil comprenant en outre :
un premier amplificateur (522) pour amplifier les signaux dans le premier mode ;
un deuxième amplificateur (524) pour amplifier les signaux dans le deuxième mode ; et un groupe d'autres commutateurs comprenant des premier, deuxième, troisième et quatrième commutateurs supplémentaires (531, 532, 533, 534), chacun ayant une première extrémité et une deuxième extrémité, dans lequel
la première extrémité du premier autre commutateur est fonctionnellement raccordable au trajet de transmission (510), et la deuxième extrémité du premier autre commutateur est fonctionnellement raccordée au premier amplificateur ;
la première extrémité du deuxième autre commutateur est fonctionnellement raccordable au trajet de transmission (510), et la deuxième extrémité du deuxième autre commutateur est fonctionnellement raccordée au deuxième amplificateur ;
la première extrémité du troisième autre commutateur est fonctionnellement raccordable à l'autre trajet de transmission (520), et la deuxième extrémité du troisième autre commutateur est fonctionnellement raccordée au premier amplificateur ; et
la première extrémité du premier autre commutateur est fonctionnellement raccordable à l'autre trajet de transmission (520), et la deuxième extrémité du quatrième autre commutateur est fonctionnellement raccordée au deuxième amplificateur,

21. Appareil selon la revendication 5, comprenant en outre :
un élément d'adaptation disposé entre lesdites une ou plusieurs antennes et le symétriseur, l'élément d'adaptation ayant un premier élément d'adaptation raccordable à l'extrémité auxdites une ou plusieurs antennes et un deuxième élément d'adaptation raccordé à l'extrémité au symétriseur ; et
un autre symétriseur disposé entre l'élément d'adaptation et le deuxième filtre passe-bande, l'autre symétriseur ayant une première extrémité de symétriseur raccordée à une extrémité de deuxième élément d'adaptation et une deuxième extrémité de symétriseur raccordée au deuxième filtre passe-bande.

22. Appareil selon la revendication 21, dans lequel la première bande de fréquence a une première plage de fréquence sensiblement comprise entre 1930 MHz et 1990 MHz, et la deuxième bande de fréquence a une deuxième plage de fréquence sensiblement comprise entre 2110 MHz et 2170 MHz.

23. Appareil selon la revendication 21, comprenant en outre :
un deuxième élément d'adaptation (562) ;
un troisième filtre passe-bande (552) disposé dans un trajet de transmission (510) pour filtrer des signaux dans la troisième bande de fréquence, le troisième filtre passe-bande ayant une première extrémité et une deuxième extrémité, la première extrémité étant fonctionnellement raccordable auxdites une ou plusieurs antennes par l'intermédiaire du deuxième élément d' adaptation ; et
un deuxième commutateur (542) connecté à la deuxième extrémité du troisième filtre passe-bande.

24. Appareil selon la revendication 23, comprenant en outre :
un troisième élément d'adaptation (564) ;
un quatrième filtre passe-bande (554) disposé dans un autre trajet de transmission (520) pour filtrer des signaux dans la quatrième bande de fréquence, le quatrième filtre passe-bande ayant une première extrémité et une deuxième extrémité, la première extrémité étant fonctionnellement raccordable auxdites une ou plusieurs antennes par l'intermédiaire du troisième élément d' adaptation ; et
un deuxième commutateur (544) raccordé à la deuxième extrémité du quatrième filtre passe-bande.

25. Appareil selon la revendication 23, dans lequel
la première bande de fréquence a une première plage de fréquence sensiblement comprise entre 1930 MHz et 1990 MHz ;
la deuxième bande de fréquence a une deuxième plage de fréquence sensiblement comprise entre 2110 MHz et 2170 MHz ;
la troisième bande de fréquence a une troisième plage de fréquence sensiblement comprise entre 1710 MHz et 1785 MHz ; et
la quatrième bande de fréquence a une quatrième plage de fréquence sensiblement comprise entre 1850 MHz et 1910 MHz.

26. Dispositif de communication comprenant :
une ou plusieurs antennes (12 ; 13 ; 14) pour transporter des signaux de radiofréquence ; et
un appareil (802 ; 803 ; 804 ; 812 ; 813 ; 814) selon l'une quelconque des revendications précédentes.

27. Terminal mobile (1) comprenant un dispositif de communication selon la revendication 26.

28. Procédé comprenant :
le filtrage passe-bande de signaux de radiofréquence transportés via un premier trajet de signal vers ou depuis une ou plusieurs antennes de manière à produire des signaux dans une première bande de fréquence ;
le filtrage passe-bande de signaux de radiofréquence transportés via un deuxième trajet de signal vers ou depuis une ou plusieurs antennes de manière à produire des signaux dans une deuxième bande de fréquence différente de la première bande de fréquence ; et
commuter les signaux transportés via le premier trajet de signal indépendamment du fait que le deuxième trajet de signal utilise un commutateur ayant un premier état activé et un deuxième état désactivé de manière à activer sélectivement le premier trajet de signal, dans lequel les signaux transportés depuis les une ou plusieurs antennes sont commutés après le filtrage de ceux-ci et les signaux transportés vers les une ou plusieurs antennes sont commutés avant le filtrage de ceux-ci.

29. Procédé selon la revendication 28, dans lequel le premier trajet de signal comprend un trajet de transmission et le deuxième trajet de signal comprend un chemin de réception, ledit procédé comprenant en outre :
le retardement des signaux transportés dans le premier trajet de signal après le filtrage de ceux-ci.

30. Procédé selon la revendication 28, dans lequel le premier trajet de signal comprend un premier chemin de réception et le deuxième trajet de signal comprend un deuxième chemin de réception, ledit procédé comprenant en outre :
la commutation des signaux transportés via le deuxième trajet de signal de manière à activer sélectivement le deuxième trajet de signal, dans lequel les signaux sont commutés après le filtrage de ceux-ci.

31. Procédé selon la revendication 30, comprenant en outre :
l'équilibrage en utilisant un symétriseur des signaux transportés via les premier et deuxième trajets de signal avant le filtrage de ceux-ci.
